# EUROPÄISCHE PATENTSCHRIFT

(11) **EP 3 715 261 B1**
(45) Veröffentlichungstag und Bekanntmachung des Hinweises auf die Patenterteilung: **27.09.2023**
(21) Anmeldenummer: 20165808.5
(22) Anmeldetag: 26.03.2020
(51) Int. Cl.: B64D 37/10, F17C 7/00

(54) **TREIBSTOFFENTNAHMESYSTEM, TREIBSTOFFTANKVORRICHTUNG MIT TREIBSTOFFENTNAHMESYSTEM UND BRENNSTOFFZELLENSYSTEM MIT TREIBSTOFFENTNAHMESYSTEM**
FUEL REMOVAL SYSTEM, FUEL TANK DEVICE WITH FUEL REMOVAL SYSTEM, AND FUEL CELL SYSTEM WITH FUEL REMOVAL SYSTEM
SYSTÈME DE SOUTIRAGE DE CARBURANT, DISPOSITIF DE RÉSERVOIR DE CARBURANT POURVU DE SYSTÈME DE SOUTIRAGE DE CARBURANT ET SYSTÈME DE PILE À COMBUSTIBLE POURVU DE SYSTÈME DE TIRAGE DE CARBURANT

(30) Priorität: 29.03.2019 DE 102019108158
(43) Veröffentlichungstag der Anmeldung: 30.09.2020
(73) Patentinhaber: Airbus Operations GmbH, 21129 Hamburg (DE)
(72) Erfinder: Law, Barnaby, 21129 Hamburg (DE)
(74) Vertreter: Schornack, Oliver

(56) Entgegenhaltungen:
- WO-A1-2005/003621
- DE-A1- 10 021 681
- DE-A1- 19 910 893

## Beschreibung

Die Erfindung betrifft ein Treibstoffentnahmesystem, eine Treibstofftankvorrichtung sowie ein Brennstoffzellensystem jeweils mit einem Treibstoffentnahmesystem. Insbesondere betrifft die Erfindung ein Treibstoffentnahmesystem sowie eine Treibstofftankvorrichtung und ein Brennstoffzellensystem mit einem Treibstoffentnahmesystem, das gasförmigen Treibstoff aus einem Treibstofftank fördert, auf ein höheres Druckniveau bringt und damit ein Ventil mit einer pneumatischen Betätigungseinrichtung betätigt.

Herkömmliche Brennstoffzellensysteme sind dazu ausgelegt, gasförmigen und/oder flüssigen Treibstoff, wie zum Beispiel Wasserstoff, über Leitungen zu fördern. Die Leitungen können mit pneumatischen oder elektromagnetischen Ventilen versehen sein, um eine Durchflussmenge des Treibstoffs durch die entsprechende Leitung zu steuern. Für den Betrieb der pneumatischen bzw. elektromagnetischen Ventile ist ein pneumatisches System bzw. ein elektrischer Kreislauf notwendig. In Flugzeugen beispielsweise wurden hierfür entweder bestehende pneumatische Systeme oder elektrische Kreisläufe verwendet und die Betätigungseinrichtung der Ventile daran angeschlossen oder speziell für das Brennstoffzellensystem vorgesehene pneumatische Systeme oder elektrische Kreisläufe installiert. Dadurch erhöht sich jedoch der Leistungsbedarf des jeweiligen Flugzeugssystems sowie das Gewicht für zusätzliche Systeme.

Aus der DE 100 21 681 A1 ist beispielsweise ein Energiespeichersystem, insbesondere System zum Speichern von Wasserstoff bekannt. Der Energiespeicher weist einen ersten Speicher auf, der mit einer Zuleitung für einen flüssigen Energieträger, insbesondere für flüssigen Wasserstoff, sowie mit einer Entnahmeleitung zum Transportieren des Energieträgers zu einem Verbraucher versehen ist.

Aus der WO 2005/003621 A1 ist weiter beispielsweise ein Speichersystem, insbesondere für ein kryogenes Medium bekannt. Dieses weist einen für die Speicherung eines kryogenen Mediums geeigneten Speicherbehälter, eine Zuleitung in den Speicherbehälter, über die dem Speicherbehälter das zu speichernde Medium zugeführt wird, einer Flüssigentnahmeleitung, über die das Medium einem Verbraucher zugeführt wird, und einen in der Flüssigentnahmeleitung angeordneten Kryokompressor, der das dem Verbraucher zuzuführende Medium verdichtet, auf.

Der Erfindung liegt die Aufgabe zugrunde, ein Treibstoffentnahmesystem, eine Treibstofftankvorrichtung sowie ein Brennstoffzellensystem bereitzustellen, die einfacher zu steuern sind und dabei gewichtssparender ausgebildet werden können.

Diese Aufgabe wird durch ein Treibstoffentnahmesystem mit den Merkmalen des Anspruchs 1, durch eine Treibstofftankvorrichtung mit den Merkmalen des Anspruchs 8 und ein Brennstoffzellensystem mit den Merkmalen des Anspruchs 10 gelöst.

Gemäß einem ersten Aspekt zum besseren Verständnis der vorliegenden Offenbarung umfasst ein Treibstoffentnahmesystem zum Entnehmen eines gasförmigen Treibstoffs aus einem Treibstofftank eine Fördereinrichtung, die dazu eingerichtet ist, gasförmigen Treibstoff zu fördern und von einem ersten Druckniveau auf ein zweites Druckniveau zu bringen, und eine erste Leitung, die dazu eingerichtet ist, die Fördereinrichtung mit dem Inneren des Treibstofftanks fluidisch zu verbinden.

Die Fördereinrichtung kann beispielsweise in Form eines Kompressors, eines Gebläses oder einer Pumpe für Gase ausgestaltet sein. Durch die Fördereinrichtung, die das Druckniveau des gasförmigen Treibstoffs erhöhen kann, ist es möglich, den Treibstoff auf einem geringeren Druckniveau in dem Treibstofftank zu lagern, d. h. mit dem ersten Druckniveau. Beispielsweise kann der Treibstoff Wasserstoff für eine Brennstoffzelle sein. Dieser wird üblicherweise bei ca. 6 bis 10 bar gelagert, um mit einem entsprechenden Druckniveau zu der Brennstoffzelle geleitet zu werden, wobei Druckverluste aufgrund von Leitungsführung, Ventilen etc. berücksichtigt werden müssen. Durch die Fördereinrichtung kann der Treibstoff nun bei einem geringeren Druckniveau, beispielsweise 1 bis 4 bar, bevorzugt bei 1 bis 3 bar und besonders bevorzugt bei 2 bar, gelagert werden. Dies erlaubt eine einfachere Struktur des Treibstofftanks, wodurch dieser deutlich leichter und somit gewichtssparender ausgestaltet sein kann. Die Fördereinrichtung kann dazu ausgelegt sein, bei Treibstoff in Form von Wasserstoff diesen von dem ersten Druckniveau in dem Treibstofftank auf das zweite Druckniveau von ca. 15 bis 22 bar, bevorzugt 18 bis 21 bar und besonders bevorzugt 20 bar, anzuheben.

Ferner umfasst das Treibstoffentnahmesystem einen Puffertank, der dazu eingerichtet ist, den Treibstoff mit dem zweiten Druckniveau zu speichern, und der einen ersten Auslass und einen zweiten Auslass aufweist. Zudem umfasst das Treibstoffentnahmesystem mindestens ein Ventil mit einer pneumatischen Betätigungseinrichtung und eine zweite Leitung, die an den ersten Auslass des Puffertanks angeschlossen ist und dazu eingerichtet ist, einen Teil des Treibstoffs mit dem zweiten Druckniveau zu der pneumatischen Betätigungseinrichtung des mindestens einen Ventils zu leiten. Somit wird/werden Ventil(e) des Treibstoffentnahmesystems mit Treibstoff betrieben, wodurch der Anschluss an ein gesondertes pneumatisches System nicht notwendig ist. Ferner muss ein bereits existierendes pneumatisches System, wie es bei herkömmlichen Treibstoffentnahmesystemen in Flugzeugen der Fall war, nicht für die Betätigung der Ventile des Treibstoffentnahmesystems adaptiert werden. Dadurch lässt sich Gewicht sparen, da Leitungen eines existierenden pneumatischen Systems nicht bis zum Installationsort des Treibstoffentnahmesystems verlängert werden müssen und auch ein druckerzeugendes Gerät in dem pneumatischen System nicht für eine höhere Belastung (maximale Gesamtbelastung) ausgelegt werden muss. Beispielsweise muss ein Kompressor, der in einem Flugzeug betrieben wird, ein sehr hohes Kompressionsverhältnis erzielen, da während der Flugphase ein sehr geringer Umgebungsdruck herrscht und zum Betrieb der Ventile in einem Treibstoffentnahmesystem ein hoher Betätigungsdruck notwendig ist.

Der Puffertank muss zwar dafür ausgelegt sein, den Treibstoff bei dem höheren zweiten Druckniveau zu speichern. Da der Puffertank jedoch nur für eine Treibstoffmenge ausgelegt sein muss, die zur Betätigung des mindestens einen Ventils und/oder für den Betrieb einer angeschlossenen Brennstoffzelle ausreicht, kann dieser deutlich kleiner als der Treibstofftank dimensioniert sein. Beispielsweise ist es ausreichend, einen Puffertank zur zwischenzeitlichen Lagerung von ca. 10 bis 50 g gasförmigen Treibstoffs, bevorzugt 15 bis 30 g und besonders bevorzugt 20 g gasförmigen Treibstoffs, vorzusehen. Ferner kann die Größe des Puffertanks auch in Abhängigkeit der Leistung einer angeschlossenen Brennstoffzelle ausgelegt sein, beispielsweise zur zwischenzeitlichen Lagerung von ca. 10 bis 50 g pro 100 kW Systemleistung, bevorzugt 15 bis 30 g pro 100 kW und besonders bevorzugt 20 g pro 100 kW. Dadurch wird die Gewichtseinsparung bei dem Treibstofftank, der nicht mehr für hohe Drücke ausgelegt sein muss, kaum bis gar nicht konterkariert. Ferner muss der Puffertank nicht dafür ausgelegt sein, Treibstoff auf dem zweiten Druckniveau für einen längeren Zeitraum zu speichern, beispielsweise während Phasen, in denen das Treibstoffentnahmesystems nicht in Betrieb ist, sondern muss lediglich Treibstoff für die Zeit des Betriebs des Treibstoffentnahmesystems vorhalten. Mit anderen Worten muss der Puffertank nicht so ausgestaltet und gesichert sein, dass er den Treibstoff wie ein üblicher Treibstofftank lange und sicher aufbewahrt. So kann der Puffertank auch entleert werden, wenn das Treibstoffentnahmesystems nicht in Betrieb ist oder abgeschaltet wird. Beispielsweise kann der in dem Puffertank auf dem zweiten Druckniveau gespeicherte Treibstoff aufgrund des höheren Druckniveaus leicht in den Treibstofftank zurückgeführt werden.

Das Treibstoffentnahmesystem umfasst eine dritte Leitung, die an dem zweiten Auslass des Puffertanks angeschlossen ist und dazu eingerichtet ist, den Treibstoff mit dem zweiten Druckniveau zu einem Verbraucher zu leiten. Der Verbraucher kann ein Motor, eine Brennstoffzelle oder andere Maschine sein, die die Energie des Treibstoffs in elektrische Energie, kinetische Energie und/oder Wärme umsetzt. Wenn der Verbraucher eine Brennstoffzelle ist, benötigt diese Wasserstoff mit einem Druckniveau von ca. 2 bar (2 bar +/- 0,5 bar), welches von der Fördereinrichtung (über den Puffertank) bereitgestellt wird. Somit kann der Treibstoff in dem Treibstofftank bei dem ersten, geringeren Druckniveau gelagert werden, unabhängig von Druckverlusten in Leitungen, Ventilen, etc. zwischen Treibstofftank und Verbraucher.

Die dritte Leitung weist einen Abschnitt auf, der durch das Innere des Treibstofftanks führt und der einen Wärmetauscher zum Verdampfen von flüssigem Treibstoff in dem Treibstofftank umfasst. Aufgrund der Erhöhung des Drucks des Treibstoffs auf das zweite Druckniveau, wird dem Treibstoff eine bestimmte Menge Energie zugeführt. Beispielsweise wird der gasförmige Treibstoff auch erwärmt, während er durch die Fördereinrichtung komprimiert wird. Somit kann der dem Treibstofftank entnommene und auf das zweite Niveau angehobene Treibstoff als Wärmequelle in dem Treibstofftank verwendet werden, um dort flüssigen Treibstoff zu verdampfen. So kann der Treibstoff in der dritten Leitung einen Sublimierungsenergieeintrag in dem Treibstofftank leisten. Beispielsweise kann bei Wasserstoff als Treibstoff dieser durch die Fördereinrichtung bei Anhebung von dem ersten Druckniveau in dem Treibstofftank auf das zweite Druckniveau in dem Puffertank um ca. 5 K erwärmt. Diese Wärmeenergie reicht für gewöhnlich aus, um flüssigen Wasserstoff in den Treibstofftank zu verdampfen.

Alternativ oder zusätzlich kann in einer Ausgestaltungsvariante in dem Inneren des Treibstofftanks auch ein gesonderter Wärmetauscher eines gesonderten Kühlkreislaufes angeordnet sein, der Wärmeenergie in den flüssigen Treibstoff abgibt, um dort Sublimierungsenergie einzubringen.

In einer weiteren Ausgestaltungsvariante kann die pneumatische Betätigungseinrichtung des mindestens einen Ventils dazu eingerichtet sein, das Ventil ausschließlich mittels des Treibstoffs mit dem zweiten Druckniveau zu öffnen und zu schließen. Mit anderen Worten ist der Treibstoff mit dem zweiten Druckniveau in ausreichender Menge und mit ausreichend hohem Druck in dem Pufferspeicher vorhanden, um das mindestens eine Ventil zwischen einer Offenstellung und einer Schliessstellung oder einer dazwischenliegenden teilgeöffneten Stellung zu bewegen. So muss die Betätigungseinrichtung für das mindestens eine Ventil keine zusätzlichen Betätigungselemente, wie zum Beispiel Federn, elektromagnetische Betätiger, etc., umfassen. Eine pneumatische Betätigungseinrichtung des mindestens einen Ventils ist zudem die zuverlässigere Variante, beispielsweise gegenüber elektromagnetisch betriebenen Ventilen. So müssen beispielsweise elektromagnetisch betriebene Ventile einen Motorantrieb o. ä. aufweisen, der bei sehr geringen Temperaturen zuverlässig arbeitet, d. h. schnelle und zuverlässige Schließ- und Öffnungszeiten aufweist.

In einer anderen Ausgestaltungsvariante kann ein erstes Ventil des mindestens einen Ventils in der dritten Leitung stromabwärts des Abschnitts durch das Innere des Treibstofftanks angeordnet sein und dazu eingerichtet sein, eine Durchflussmenge des Treibstoffs durch die dritte Leitung zu regeln. Mit anderen Worten regelt das erste Ventil die dem Verbraucher zugeführte Treibstoffmenge. Das Treibstoffentnahmesystem benötigt hierfür keine Komponenten eines anderen Systems, beispielsweise eines pneumatischen oder elektrischen Systems. Dadurch kann das Treibstoffentnahmesystems auch sehr kompakt und somit weiter gewichtssparend hergestellt werden. Auch ist ein nachträglicher Einbau oder der Austausch des Treibstoffentnahmesystems aufgrund seiner Kompaktheit schnell und einfach durchzuführen.

Das erste Ventil kann in einer optionalen Ausgestaltung ein Druckreduzierungsventil sein. Beispielsweise kann das erste Ventil den gasförmigen Treibstoff stromaufwärts des ersten Ventils auf dem zweiten Druckniveau halten, während stromabwärts des ersten Ventils in der dritten Leitung ein drittes Druckniveau eingestellt wird. Beispielsweise kann das erste Ventil den Druck des gasförmigen Treibstoffs auf ca. 8 bis 12 bar, bevorzugt 9 bis 11 bar und besonders bevorzugt 10 bar, reduzieren. Dies entspricht einem üblichen Druck des Treibstoffs in Brennstoffzellensystemen. Der gasförmige Treibstoff in den Leitungen des Treibstoffentnahmesystems, insbesondere der zweiten und dritten Leitung, kann somit auf dem zweiten Druckniveau gehalten werden, wodurch eine Verflüssigung des Treibstoffs verhindert wird. Auch wenn das Treibstoffentnahmesystem zwischenzeitlich außer Betrieb ist, kann der Treibstoff in den Leitungen auf dem zweiten Druckniveau gehalten werden und somit vor einer Verflüssigung geschützt werden, wodurch stromabwärts gelegene Bauteile, wie zum Beispiel Leitungen, Ventile, etc., nicht durch flüssigen Treibstoff beschädigt werden.

In einer anderen Ausgestaltungsvariante kann das Treibstoffentnahmesystem ferner eine Bypass-Leitung, die den Abschnitt der dritten Leitung durch das Innere des Treibstofftanks außerhalb des Treibstofftanks umgeht, und ein zweites Ventil des mindestens einen Ventils, das in der Bypass-Leitung angeordnet ist und dazu eingerichtet ist, eine Durchflussmenge des Treibstoffs durch die Bypass-Leitung zu regeln, umfassen. Durch die Bypass-Leitung kann der Wärmeeintrag in den Treibstofftank gesteuert werden. So kann durch Öffnen des zweiten Ventils Treibstoff auf dem zweiten Druckniveau an dem Treibstofftank vorbeigeführt werden, sodass weniger Energie (Wärmeenergie) über den ersten Wärmetauscher in dem Abschnitt der dritten Leitung durch das Innere des Treibstofftanks in den (flüssigen) Treibstoff eingebracht wird. Die Steuerung der Durchflussmenge durch die Bypass-Leitung erfolgt ebenfalls über ein Ventil, welches eine pneumatische Betätigung aufweist, die wiederum mit dem Treibstoff auf dem zweiten Druckniveau aus der zweiten Leitung betrieben wird. Somit sind für die Bypass-Leitung und deren Betrieb keine zusätzlichen Systeme zum Ansteuern des zweiten Ventils (Bypass-Ventils) notwendig.

In noch einer weiteren Ausgestaltungsvariante kann das Treibstoffentnahmesystem einen zweiten Wärmetauscher umfassen, der dazu eingerichtet ist, den gasförmigen Treibstoff als Wärmesenke für ein Kühlmittel eines Kühlkreislaufes zu nutzen. Der zweite Wärmetauscher kann beispielsweise in der ersten Leitung, zweiten Leitung und/oder dritten Leitung angeordnet sein. Der Treibstoff, insbesondere im Fall von Wasserstoff, weist für gewöhnlich ein sehr geringes Temperaturniveau auf, wodurch er sich sehr gut eignet, um als Wärmesenke eines Kühlsystems zu dienen. Zudem wird über den Wärmeenergieeintrag in den Treibstoff eine Verflüssigung des Treibstoffs in der entsprechenden Leitung verhindert und/oder das Druckniveau weiter erhöht, wodurch keine zusätzlichen Fördereinrichtungen bis zum Verbraucher notwendig sind. Beispielsweise kann der zweite Wärmetauscher in der dritten Leitung zwischen dem zweiten Auslass des Puffertanks und dem Abschnitt der dritten Leitung durch das Innere des Treibstofftanks angeordnet sein. Somit kann die über den zweiten Wärmetauscher aufgenommene Wärmeenergie über den ersten Wärmetauscher an den (flüssigen) Treibstoff in den Treibstofftank abgegeben werden. Alternativ oder zusätzlich kann der erste Wärmetauscher auch in der ersten Leitung angeordnet sein. Dadurch wird der gasförmige Treibstoff in der ersten Leitung erwärmt und sein Druckniveau bereits angehoben, wodurch die Fördereinrichtung weniger Arbeit zum Anheben des Drucks des Treibstoffs auf das zweite Druckniveau benötigt.

Bei dem Kühlkreislauf kann es sich beispielsweise um einen Kühlkreislauf eines Brennstoffzellensystems handeln, wobei das Treibstoffentnahmesystem Teil des Brennstoffzellensystems ist. Mit anderen Worten wird die in der Brennstoffzelle des Brennstoffzellensystems erzeugte Abwärme zum Betrieb des Treibstoffentnahmesystems verwendet. Das Kühlmittel in dem Kühlkreislauf eines Brennstoffzellensystems kann eine Temperatur von ca. 60 bis 90 °C aufweisen, während gelagerter Wasserstoff als Treibstoff eine Temperatur von ca. -240 bis -250 °C (ca. 20 bis 30 K) hat und somit eine sehr gute Wärmesenke darstellt.

Alternativ oder zusätzlich kann das Treibstoffentnahmesystem ferner einen dritten Wärmetauscher umfassen, der dazu eingerichtet ist, den gasförmigen Treibstoff in der ersten Leitung mit dem gasförmigen Treibstoff in der dritten Leitung thermisch zu koppeln. Dabei kann der gasförmige Treibstoff in der ersten Leitung im Temperaturniveau angehoben werden, da der gasförmige Treibstoff in der dritten Leitung aufgrund der Anhebung auf das zweite Druckniveau durch die Fördereinrichtung auch eine höhere Temperatur als der Treibstoff in der ersten Leitung aufweist. Dies verhindert eine Verflüssigung des Treibstoffs in der ersten Leitung oder ermöglicht eine Verdampfung von Resten flüssigen Treibstoffs in der ersten Leitung, bevor dieser der Fördereinrichtung zugeführt wird. Dadurch lassen sich Schäden an der Fördereinrichtung durch flüssigen Treibstoff verhindern. Gemäß einer Variante ist der erste Wärmetauscher und der dritten Wärmetauscher in einem gemeinsamen Bauteil kombiniert, sodass der Treibstoff in der ersten Leitung, der Treibstoff in der dritten Leitung und das Kühlmittel in dem Kühlkreislauf untereinander thermisch gekoppelt sind.

In einer weiteren Ausgestaltungsvariante kann das Treibstoffentnahmesystem ein Hauptventil umfassen, das in der zweiten Leitung angeordnet ist und das dazu eingerichtet ist, eine Durchflussmenge des Treibstoffs mit dem zweiten Druckniveau durch die zweite Leitung zu regeln. Das Hauptventil regelt somit den Zufluss von Treibstoff auf dem zweiten Druckniveau zu der pneumatischen Betätigung des mindestens einen Ventils. Durch Schließen des Hauptventils kann der Betrieb des Treibstoffentnahmesystems eingestellt werden. Beispielsweise kann jedes des mindestens einen Ventils so ausgestaltet sein, dass es sich in einer Ruhestellung immer im geschlossenen Zustand befindet (beispielsweise mittels einer mechanischen Feder oder dergleichen). Die pneumatische Betätigung dient dann dem Öffnen des Ventils bis zu dem gewünschten Öffnungsgrad. Selbstverständlich kann jedes des mindestens einen Ventils auch so ausgestaltet sein, dass der Treibstoff auf dem zweiten Druckniveau zur pneumatischen Betätigung sowohl zum Öffnen als auch Schließen des Ventils verwendet wird.

Gemäß einem weiteren Aspekt zum besseren Verständnis der vorliegenden Offenbarung umfasst eine Treibstofftankvorrichtung einen Treibstofftank zum Speichern eines Treibstoffs in flüssigem und/oder gasförmigem Zustand und ein Treibstoffentnahmesystem gemäß dem ersten Aspekt. Dabei kann die erste Leitung beispielsweise in einem (im eingebauten Zustand des Treibstofftanks) oberen Abschnitt des Treibstofftanks eine Öffnung aufweisen, um gasförmigen Treibstoff durch die erste Leitung zu der Fördereinrichtung zu leiten. Der erste Wärmetauscher, der im Inneren des Treibstofftanks angeordnet ist, kann wiederum in einem (im eingebauten Zustand des Treibstofftanks) unteren Abschnitt des Treibstofftanks vorgesehen sein, beispielsweise in einem Sumpf des Treibstofftanks, um von flüssigem Treibstoff umgeben zu sein.

In einer Ausgestaltungsvariante kann die Treibstofftankvorrichtung ferner eine Zuleitung in den Treibstofftank zum Befüllen des Treibstofftanks mit flüssigem Treibstoff und ein drittes Ventil des mindestens einen Ventils, das in der Zuleitung angeordnet ist und dazu eingerichtet ist, eine Durchflussmenge des Treibstoffs durch die Zuleitung zu regeln, umfassen. Dadurch kann die Treibstofftankvorrichtung auch während des Betriebs mit flüssigem Treibstoff gefüllt werden. Zur Steuerung des flüssigen Treibstoffs, der in den Treibstofftank geleitet wird, wird kein zusätzliches System benötigt. Lediglich die Fördereinrichtung des Treibstoffentnahmesystems muss betrieben werden, um das dritte Ventil pneumatisch zu betätigen.

Gemäß einem weiteren Aspekt zum besseren Verständnis der vorliegenden Offenbarung umfasst ein Brennstoffzellensystem eine Brennstoffzelle, die mit gasförmigem Treibstoff betrieben ist, und ein Treibstoffentnahmesystem gemäß dem ersten Aspekt. Alternativ oder zusätzlich kann das Brennstoffzellensystem eine Treibstofftankvorrichtung gemäß dem weiteren (zweiten) Aspekt umfassen.

Gemäß noch einem weiteren Aspekt zum besseren Verständnis der vorliegenden Offenbarung umfasst ein Flugzeug ein Treibstoffentnahmesystem, eine Treibstofftankvorrichtung und/oder ein Brennstoffzellensystem gemäß der vorherigen Aspekte. Der Umfang der vorliegenden Erfindung ist lediglich durch die beiliegenden Patentansprüche definiert.

Die oben beschriebenen Aspekte, Ausgestaltungen und Varianten können selbstverständlich kombiniert werden, ohne dass dies explizit beschrieben ist. Jede der beschriebenen Ausgestaltungsvarianten ist somit optional zu jedem der Aspekte, Ausgestaltungen und Varianten oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

Eine bevorzugte Ausführungsform der Erfindung wird nun anhand der beigefügten schematischen Zeichnung näher erläutert, die ein Treibstoffentnahmesystem, eine Treibstofftankvorrichtung sowie einen Teil eines Brennstoffzellensystems zeigt.

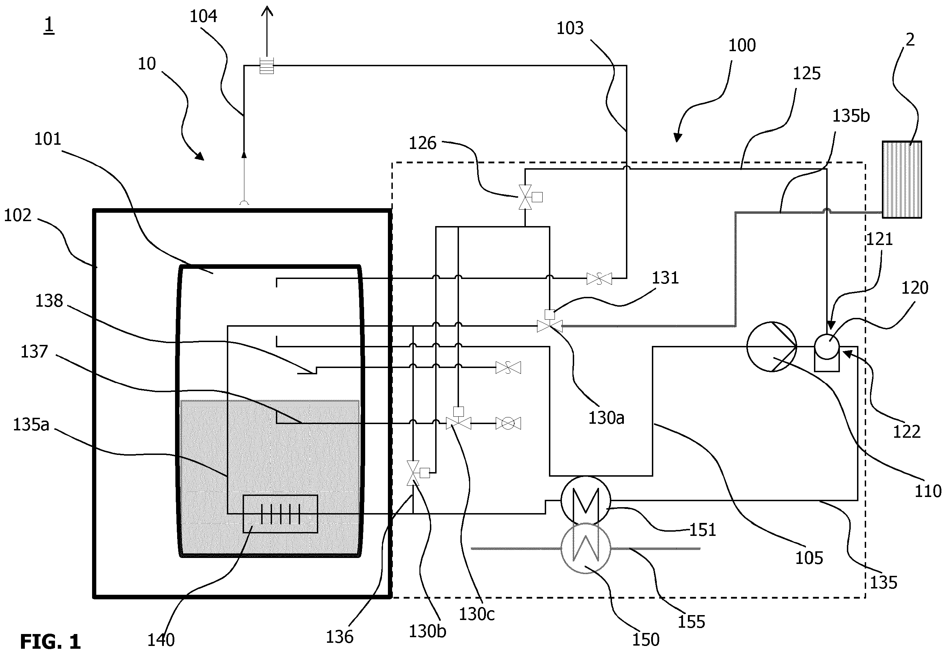

Das in der einzigen Figur (zumindest abschnittsweise) dargestellte Brennstoffzellensystem 1 umfasst eine Brennstoffzelle 2, die mit gasförmigem Treibstoff betrieben wird. Dieser kann in einem Treibstofftank 101 einer Treibstofftankvorrichtung 10 gelagert werden. Der Treibstofftank 101 enthält gasförmigen Treibstoff sowie flüssigen Treibstoff (in dem Treibstofftank 101 schraffiert dargestellt).

Ein Treibstoffentnahmesystem 100 umfasst zur Entnahme des Treibstoffs aus dem Treibstofftank 101 eine Fördereinrichtung 110, die über eine erste Leitung 105 mit dem Inneren des Treibstofftanks 101 verbunden ist. Die erste Leitung 105 beginnt vorzugsweise in einem oberen Bereich des Treibstofftanks 101, um nur gasförmigen Treibstoff und keinen flüssigen Treibstoff aus dem Treibstofftank 101 zu leiten. Die Fördereinrichtung 110 hebt den gasförmigen Treibstoff von einem ersten Druckniveau, das in dem Treibstofftank 101 vorliegt, auf ein zweites Druckniveau an. Beispielsweise kann die Fördereinrichtung 110 den Druck des gasförmigen Treibstoffs von ca. 2 bar auf ca. 20 bar anheben.

Anschließend wird der gasförmige Treibstoff mit dem zweiten Druckniveau in einem Puffertank 120 (zwischen-) gespeichert. Der Puffertank 120 weist einen ersten Auslass 121 auf, an dem eine zweite Leitung 125 angeschlossen ist. Über die zweite Leitung 125 wird ein Teil des Treibstoffs mit dem zweiten Druckniveau zu einer pneumatischen Betätigungseinrichtung 131 mindestens eines Ventils 130 geleitet. Hierfür kann die zweite Leitung 125 ein Hauptventil 126 umfassen, wobei sich die zweite Leitung 125 stromabwärts des Hauptventils 126 verzweigt und Zuleitungen zu dem jeweiligen Ventil 130a, 130b, 130c bildet. Selbstverständlich können weitere Ventile auch außerhalb des Treibstoffentnahmesystems über eine pneumatischen Betätigungseinrichtung 131 verfügen, die über den Treibstoff aus der zweiten Leitung 125 betätigt wird. Jede der Betätigungseinrichtungen 131 des mindestens einen Ventils 130 kann ausschließlich über den Treibstoff aus der zweiten Leitung 125 geöffnet und geschlossen werden. Alternativ kann das Öffnen oder Schließen auch über ein Federelement oder anderen mechanischen Betätiger selbständig erfolgen.

An einem zweiten Auslass 122 des Puffertanks 120 ist eine dritte Leitung 135 angeschlossen. Die dritte Leitung 135 dient in erster Linie der Zuführung des Treibstoffs zu einem Verbraucher, beispielsweise einer Brennstoffzelle 2.

In der dritten Leitung 135 ist ein erster Wärmetauscher 140 vorgesehen, der sich in einem Abschnitt 135a der dritten Leitung 135 durch das Innere des Treibstofftanks 101 befindet. Durch den ersten Wärmetauscher 140 kann Wärmeenergie in den flüssigen Treibstoff in dem Treibstofftank 101 eingebracht werden, wodurch dieser verdampft.

Ferner kann in der dritten Leitung 135 ein zweiter Wärmetauscher 150 vorgesehen sein, in dem der Treibstoff in der dritten Leitung 135 als Wärmesenke für ein Kühlmittel eines Kühlkreislaufes 155 dient. Der Kühlkreislauf 155 kann beispielsweise zur Kühlung der Brennstoffzelle 2 verwendet werden. Alternativ oder zusätzlich kann ein dritter Wärmetauscher 151 vorgesehen sein, der den gasförmigen Treibstoff in der ersten Leitung 105 mit dem gasförmigen Treibstoff in der dritten Leitung 135 thermisch gekoppelt. Dadurch lässt sich der gasförmige Treibstoff in der ersten Leitung 105 im gasförmigen Zustand halten oder Reste von flüssigem Treibstoff in dem dritten Wärmetauscher 151 verdampft werden. In der Figur sind der zweite Wärmetauscher 150 und der dritte Wärmetauscher 151 getrennt voneinander dargestellt. Selbstverständlich kann es sich um einen kombinierten Wärmetauscher handeln, der den Treibstoff in der ersten Leitung 105, den Treibstoff in der dritten Leitung 135 und das Kühlmittel des Kühlkreislaufes 155 thermisch miteinander koppelt.

Um die Menge des zu verdampfenden Treibstoffs in dem Treibstofftank 101 durch den ersten Wärmetauscher 140 zu regeln, ist eine Bypass-Leitung 136 vorgesehen, die den Abschnitt 135a der dritten Leitung 135 außerhalb des Treibstofftanks 101 umgeht, und somit den ersten Wärmetauscher 140 umgeht. Die Bypass-Leitung zweigt vor dem Abschnitt 135a der dritten Leitung 135 im Inneren des Treibstofftanks 101 von der dritten Leitung 135 ab und mündet nach dem Abschnitt 135a wieder in die dritte Leitung 135 ein. Ein in der Bypass-Leitung angeordnetes zweites Ventil 130b des mindestens einen Ventils 130 kann eine Durchflussmenge des Treibstoffs durch die Bypass-Leitung 136 regeln, wodurch auch eine Durchflussmenge des Treibstoffs durch den Abschnitt 135a durch das Innere des Treibstofftanks 101 und den ersten Wärmetauscher 140 geregelt wird.

Nach dem Abschnitt 135a und/oder der Bypass-Leitung 136 ist in der dritten Leitung 135 ein erstes Ventil 130a vorgesehen. Der bis zu dem ersten Ventil 130a geleitete Treibstoff wird anschließend durch einen weiteren Abschnitt 135b der dritten Leitung 135 zu dem Verbraucher, beispielsweise einer Brennstoffzelle 2, geleitet. Hierfür regelt das erste Ventil 130a eine Durchflussmenge des Treibstoffs durch den weiteren Abschnitt 135b der dritten Leitung 135. Das erste Ventil 130a kann auch ein Druckminderungsventil sein. Beispielsweise kann der gasförmige Treibstoff stromaufwärts des ersten Ventils 130a in etwa das zweite Druckniveau aufweisen (mit entsprechenden Druckverlusten durch Leitungen 135, 135a, 136, Wärmetauscher 140, 150, 151 und/oder Ventile 136), während das erste Ventil 130a den gasförmigen Treibstoff für den weiteren Abschnitt 135b der dritten Leitung 135 auf das von dem Verbraucher 2 benötigte Druckniveau regelt.

Die Treibstofftankvorrichtung 10 kann neben dem Treibstofftank 101 auch einen Schutztank 102 vorsehen. Dieser dient in erster Linie dem Auffangen von Treibstoff aus dem Treibstofftank 101, der daraus entweichen kann. Auch im Fall einer ungewollten Leckage des Treibstofftanks 101 kann der Schutztank 102 den Treibstoff auffangen. Über entsprechende Sicherheitsleitungen 103, 104 kann Treibstoff aus dem Schutztank 102 sicher in die Umgebung abgegeben werden.

Ferner kann das Treibstoffentnahmesystem 100 (mit Ausnahme des Treibstofftanks 101) innerhalb des Schutztanks 102 angeordnet sein. Dadurch kann Treibstoff, der aus einem der in der Figur rechts neben dem Schutztank 102 dargestellten Bauteile entweicht, aufgefangen und sicher abgelassen werden. Alternativ können die Elemente des Treibstoffentnahmesystems 100, in denen Treibstoff mit dem zweiten Druckniveau enthalten ist, in einem gesonderten Schutzbehälter (gestrichelt dargestellt) angeordnet sein. Für den Fall, dass Treibstoff mit dem zweiten Druckniveau entweicht, kann dieser über eine entsprechende Zuleitung in den Treibstofftank 101, beispielsweise eine Zuleitung 138 für gasförmigen Treibstoff oder eine gesonderte Zuleitung, selbsttätig in den Treibstofftank 101 zurückgeführt werden, da der Treibstoff in den Treibstofftank 101 auf dem ersten, niedrigeren Druckniveau lagert. Nur beispielhaft können der Puffertank 122, die dritte Leitung 135 (mit Ausnahme des Abschnitts 135a im Inneren des Treibstofftanks 101), die Bypass-Leitung 136, die zweite Leitung 125, und die Ventile 126, 130 innerhalb des Schutzbehälters (gestrichelt dargestellt) angeordnet sein.

Die Treibstofftankvorrichtung 10 kann ferner eine Zuleitung 137 für flüssigen Treibstoff zum Befüllen des Treibstofftanks 101 mit flüssigem Treibstoff vorsehen. In der Zuleitung 137 kann ein drittes Ventil 130c angeordnet sein, das ebenfalls über eine pneumatische Betätigung 131 verfügt, welche über die zweite Leitung 125 mit Treibstoff auf dem zweiten Druckniveau versorgt und betätigt wird. In der Figur ist zusätzlich eine Zuleitung 138 für gasförmigen Treibstoff dargestellt. Diese kann ebenfalls über ein entsprechendes Ventil (nicht gesondert dargestellt) geöffnet und geschlossen werden.

## Patentansprüche

1. Treibstoffentnahmesystem (100) zum Entnehmen eines gasförmigen Treibstoffs aus einem Treibstofftank (101), umfassend:
- eine Fördereinrichtung (110), die dazu eingerichtet ist, gasförmigen Treibstoff zu fördern und von einem ersten Druckniveau auf ein zweites Druckniveau zu bringen;
- eine erste Leitung (105), die dazu eingerichtet ist, die Fördereinrichtung (110) mit dem Inneren des Treibstofftanks (101) fluidisch zu verbinden;
- einen Puffertank (120), der dazu eingerichtet ist, den Treibstoff mit dem zweiten Druckniveau zu speichern, und der einen ersten Auslass (121) und einen zweiten Auslass (122) aufweist;
- mindestens ein Ventil (130) mit einer pneumatischen Betätigungseinrichtung (131); und
- eine zweite Leitung (125), die an den ersten Auslass (121) des Puffertanks (120) angeschlossen ist; und
- eine dritte Leitung (135), die dazu eingerichtet ist, den Treibstoff mit dem zweiten Druckniveau zu einem Verbraucher (2) zu leiten,
**dadurch gekennzeichnet, dass**
die zweite Leitung (125) dazu eingerichtet ist, einen Teil des Treibstoffs mit dem zweiten Druckniveau zu der pneumatischen Betätigungseinrichtung (131) des mindestens einen Ventils (130) zu leiten,
die dritte Leitung (135) an dem zweiten Auslass (122) des Puffertanks (120) angeschlossen ist, und
die dritte Leitung (135) einen Abschnitt (135a) aufweist, der durch das Innere des Treibstofftanks (101) führt und der einen ersten Wärmetauscher (140) zum Verdampfen von flüssigem Treibstoff in dem Treibstofftank (101) umfasst.

2. Treibstoffentnahmesystem (100) gemäß Anspruch 1, wobei die pneumatische Betätigungseinrichtung (131) des mindestens einen Ventils (130) dazu eingerichtet ist, das Ventil (130) ausschließlich mittels des Treibstoffs mit dem zweiten Druckniveau zu öffnen und zu schließen.

3. Treibstoffentnahmesystem (100) gemäß Anspruch 1 oder 2, wobei ein erstes Ventil (130a) des mindestens einen Ventils (130) in der dritten Leitung (135) stromabwärts des Abschnitts (135a) durch das Innere des Treibstofftanks (101) angeordnet ist und dazu eingerichtet ist, eine Durchflussmenge des Treibstoffs durch die dritte Leitung (135) zu regeln.

4. Treibstoffentnahmesystem (100) gemäß Anspruch 1 oder 3, ferner umfassend:
- eine Bypass-Leitung (136), die den Abschnitt (135a) der dritten Leitung (135) durch das Innere des Treibstofftanks (101) außerhalb des Treibstofftanks (101) umgeht; und
- ein zweites Ventil (130b) des mindestens einen Ventils (130), das in der Bypass-Leitung (136) angeordnet ist und dazu eingerichtet ist, eine Durchflussmenge des Treibstoffs durch die Bypass-Leitung (136) zu regeln.

5. Treibstoffentnahmesystem (100) gemäß einem der Ansprüche 1 bis 4, ferner umfassend:
- einen zweiten Wärmetauscher (150), der dazu eingerichtet ist, den gasförmigen Treibstoff als Wärmesenke für ein Kühlmittel eines Kühlkreislaufes (155) zu nutzen.

6. Treibstoffentnahmesystem (100) gemäß einem der Ansprüche 1 bis 5, ferner umfassend:
- einen dritten Wärmetauscher (151), der dazu eingerichtet ist, den gasförmigen Treibstoff in der ersten Leitung (105) mit dem gasförmigen Treibstoff in der dritten Leitung (135) thermisch zu koppeln.

7. Treibstoffentnahmesystem (100) gemäß einem der Ansprüche 1 bis 6, ferner umfassend:
- ein Hauptventil (126), das in der zweiten Leitung (125) angeordnet ist und das dazu eingerichtet ist, eine Durchflussmenge des Treibstoffs mit dem zweiten Druckniveau durch die zweite Leitung (125) zu regeln.

8. Treibstofftankvorrichtung (10), umfassend:
- einen Treibstofftank (101) zum Speichern eines Treibstoffs in flüssigem und gasförmigem Zustand; und
- ein Treibstoffentnahmesystem (100) gemäß einem der Ansprüche 1 bis 7.

9. Treibstofftankvorrichtung (10) gemäß Anspruch 8, ferner umfassend:
- eine Zuleitung (137) in den Treibstofftank (101) zum Befüllen des Treibstofftanks (101) mit flüssigem Treibstoff; und
- ein drittes Ventil (130c) des mindestens einen Ventils (130), das in der Zuleitung (137) angeordnet ist und dazu eingerichtet ist, eine Durchflussmenge des Treibstoffs durch die Zuleitung (137) zu regeln.

10. Brennstoffzellensystem (1), umfassend:
- eine Brennstoffzelle (2), die mit gasförmigem Treibstoff betrieben ist; und
- ein Treibstoffentnahmesystem (100) gemäß einem der Ansprüche 1 bis 7; oder
- eine Treibstofftankvorrichtung (10) gemäß Anspruch 8 oder 9.

## Claims

1. Fuel removal system (100) for removing a gaseous fuel from a fuel tank (101), comprising:
- a conveying device (110) which is configured to convey gaseous fuel and to bring it from a first pressure level to a second pressure level;
- a first line (105) which is configured to fluidically connect the conveying device (110) to the interior of the fuel tank (101);
- a buffer tank (120) which is configured to store the fuel at the second pressure level and which has a first outlet (121) and a second outlet (122);
- at least one valve (130) with a pneumatic actuating device (131); and
- a second line (125) which is connected to the first outlet (121) of the buffer tank (120); and
- a third line (135) which is configured to conduct the fuel at the second pressure level to a consumer (2),
**characterized in that**
the second line (125) is configured to conduct a part of the fuel at the second pressure level to the pneumatic actuating device (131) of the at least one valve (130),
the third line (135) is connected to the second outlet (122) of the buffer tank (120), and
the third line (135) has a portion (135a) which leads through the interior of the fuel tank (101) and which comprises a first heat exchanger (140) for evaporating liquid fuel in the fuel tank (101).

2. Fuel removal system (100) according to Claim 1, the pneumatic actuating device (131) of the at least one valve (130) being configured to open and to close the valve (130) exclusively by means of the fuel at the second pressure level.

3. Fuel removal system (100) according to Claim 1 or 2, a first valve (130a) of the at least one valve (130) being arranged in the third line (135) downstream of the portion (135a) through the interior of the fuel tank (101) and being configured to regulate a throughflow quantity of the fuel through the third line (135).

4. Fuel removal system (100) according to Claim 1 or 3, comprising, furthermore:
- a bypass line (136) which bypasses, outside the fuel tank (101), the portion (135a) of the third line (135) through the interior of the fuel tank (101); and
- a second valve (130b) of the at least one valve (130) which is arranged in the bypass line (136) and is configured to regulate a throughflow quantity of the fuel through the bypass line (136).

5. Fuel removal system (100) according to one of Claims 1 to 4, comprising, furthermore:
- a second heat exchanger (150) which is configured to use the gaseous fuel as heat sink for a coolant of a cooling circuit (155).

6. Fuel removal system (100) according to one of Claims 1 to 5, comprising, furthermore:
- a third heat exchanger (151) which is configured to thermally couple the gaseous fuel in the first line (105) to the gaseous fuel in the third line (135).

7. Fuel removal system (100) according to one of Claims 1 to 6, comprising, furthermore:
- a main valve (126) which is arranged in the second line (125) and which is configured to regulate a throughflow quantity of the fuel at the second pressure level through the second line (125).

8. Fuel tank apparatus (10), comprising:
- a fuel tank (101) for storing fuel in a liquid and a gaseous state; and
- a fuel removal system (100) according to one of Claims 1 to 7.

9. Fuel tank apparatus (10) according to Claim 8, comprising, furthermore:
- a feed line (137) into the fuel tank (101) for filling the fuel tank (101) with liquid fuel; and
- a third valve (130c) of the at least one valve (130) which is arranged in the feed line (137) and is configured to regulate a throughflow quantity of the fuel through the feed line (137).

10. Fuel cell system (1), comprising:
- a fuel cell (2) which is operated with gaseous fuel; and
- a fuel removal system (100) according to one of Claims 1 to 7; or
- a fuel tank apparatus (10) according to Claim 8 or 9.

## Revendications

1. Système (100) de soutirage de carburant pour soutirer un carburant gazeux d'un réservoir de carburant (101), comprenant:
- un dispositif de transport (110) agencé de façon à transporter du carburant gazeux et à le faire passer d'un premier niveau de pression à un deuxième niveau de pression;
- un premier conduit (105) qui est adapté pour relier de manière fluidique le dispositif de transport (110) à l'intérieur du réservoir de carburant (101);
- un réservoir tampon (120) adapté pour stocker le carburant au deuxième niveau de pression et comprenant une première sortie (121) et une deuxième sortie (122);
- au moins une vanne (130) avec un dispositif d'actionnement pneumatique (131); et
- un deuxième conduit (125) raccordé à la première sortie (121) du réservoir tampon (120); et
- un troisième conduit (135) adapté pour acheminer le carburant au deuxième niveau de pression vers un consommateur (2),
**caractérisé en ce que**
le deuxième conduit (125) est adapté pour diriger une partie du carburant au deuxième niveau de pression vers le dispositif d'actionnement pneumatique (131) de l'au moins une vanne (130),
le troisième conduit (135) est raccordé à la deuxième sortie (122) du réservoir tampon (120), et
le troisième conduit (135) comprend une section (135a) qui passe à travers l'intérieur du réservoir de carburant (101) et qui comprend un premier échangeur de chaleur (140) pour vaporiser le carburant liquide dans le réservoir de carburant (101).

2. Système (100) de soutirage de carburant selon la revendication 1, dans lequel le dispositif d'actionnement pneumatique (131) de l'au moins une vanne (130) est adapté pour ouvrir et fermer la vanne (130) uniquement au moyen du carburant ayant le deuxième niveau de pression.

3. Système (100) de soutirage de carburant selon la revendication 1 ou 2, dans lequel une première vanne (130a) de l'au moins une vanne (130) est agencée dans le troisième conduit (135) en aval de la section (135a) traversant l'intérieur du réservoir de carburant (101) et est adaptée pour réguler un débit de carburant à travers le troisième conduit (135).

4. Système (100) de soutirage de carburant selon la revendication 1 ou 3, comprenant en outre:
- une conduite de dérivation (136) qui contourne la partie (135a) du troisième conduit (135) à travers l'intérieur du réservoir de carburant (101) à l'extérieur du réservoir de carburant (101); et
- une deuxième vanne (130b) de l'au moins une vanne (130), agencée dans le conduit de dérivation (136) et adaptée pour réguler un débit de carburant à travers le conduit de dérivation (136).

5. Système (100) de soutirage de carburant selon l'une des revendications 1 à 4, comprenant en outre:
- un deuxième échangeur de chaleur (150) adapté pour utiliser le carburant gazeux comme puits de chaleur pour un fluide de refroidissement d'un circuit de refroidissement (155).

6. Système (100) de soutirage de carburant selon l'une des revendications 1 à 5, comprenant en outre:
- un troisième échangeur de chaleur (151) adapté pour relier thermiquement le carburant gazeux dans le premier conduit (105) avec le carburant gazeux dans le troisième conduit (135).

7. Système (100) de soutirage de carburant selon l'une des revendications 1 à 6, comprenant en outre:
- une vanne principale (126) agencée dans le deuxième conduit (125) et adaptée pour réguler un débit de carburant ayant le deuxième niveau de pression à travers le deuxième conduit (125).

8. Dispositif de réservoir de carburant (10), comprenant:
- un réservoir de carburant (101) pour stocker un carburant à l'état liquide et à l'état gazeux; et
- un système (100) de soutirage de carburant selon l'une quelconque des revendications 1 à 7.

9. Dispositif de réservoir de carburant (10) selon la revendication 8, comprenant en outre:
- une conduite d'alimentation (137) dans le réservoir de carburant (101) pour remplir le réservoir de carburant (101) avec du carburant liquide; et
- une troisième vanne (130c) de l'au moins une vanne (130), agencée dans la conduite d'alimentation (137) et adaptée pour réguler un débit de carburant à travers la conduite d'alimentation (137).

10. Système (1) formant pile à combustible comprenant:
- une pile à combustible (2) fonctionnant avec un combustible gazeux; et
- un système (100) de soutirage de carburant selon l'une des revendications 1 à 7; ou
- un système de réservoir de carburant (10) selon la revendication 8 ou 9.
